# EUROPÄISCHE PATENTANMELDUNG

(11) **EP 0 673 793 A1**
(43) Veröffentlichungstag der Anmeldung: **27.09.1995**
(21) Anmeldenummer: 95104033.6
(22) Anmeldetag: 20.03.1995
(51) Int. Cl.: B60C 15/04

(54) **Fahrzeugreifen**

(30) Priorität: 25.03.1994 DE 4410368
(71) Anmelder: Continental Aktiengesellschaft, D-30165 Hannover (DE)
(72) Erfinder: Neddenriep, Thomas, D-29690 Schwarmstedt (DE); Thielemann, Klaus, D-31137 Hildesheim (DE)

(57) **Zusammenfassung**

Die Erfindung bezieht sich auf einen Fahrzeugreifen mit einem ringförmigen Wulstkern, der aus einem oder einer Mehrzahl von in mehreren Lagen gewickelten Draht- bzw. Drähten besteht. Um bei dem Fahrzeugreifen die Beanspruchung der Wicklungen des Wulstkerns über die Querschnittsbreite zu vergleichmäßigen, wird vorgeschlagen, daß dem Wulstkern (1) gegenüber einem Hexagonalkern (1a) in einem zumindest dreieckförmigen Bereich (I) die Wicklungen fehlen, wobei der Bereich (I) definiert ist durch die radialäußere Seite (A) mindestens die radial- und axialäußere Seite (B) des Hexagons und der Verbindungslinie (C) der Eckpunkte der Seiten (A, B).

## Beschreibung

Die Erfindung betrifft einen Fahrzeugreifen mit einem ringförmigen Wulstkern, der aus einem oder einer Mehrzahl von in mehreren Lagen gewickelten Draht bzw. Drähten besteht.

Der Wulst schlauchloser Reifen muß mit großer Vorspannung auf der Felge sitzen, um dort Dichtheit zu bewirken. Um dem Wulst eine ausreichende Stabilität zu geben, ist in ihn ein ringförmiger Drahtkern eingelegt.

Bei den Wulstkernen unterscheidet man zwischen Hexagonalkernen, die einen hexagonalförmigen Querschnitt haben und Rechteck- bzw. Parallelogrammkernen, deren Querschnitt rechteckig bzw. parallelogrammförmig ist. Hexagonalkerne bestehen aus einem einzigen in mehreren Lagen gewickelten, gegebenenfalls gummiummantelten Runddraht. Rechteck- bzw. Parallelogrammkerne können durch mehrere rechteckige nicht ummantelte Drähte gebildet sein, die ebenfalls in mehreren Lagen gewickelt sind.

Die US-PS 5,263,526 offenbart einen schlauchlosen Pneumatikreifen mit einem im wesentlichen dreieckförmigen Wulstkern, der aus mehreren Lagen Runddraht gewickelt ist. Die Fläche des Kernquerschnitts soll kleiner sein als die Fläche eines gleichschenkligen Dreiecks.

Insbesondere bei Hexagonal- und Rechteckkernen werden die einzelnen Drähte, bzw. Drahtlagen und Drahtwindungen unterschiedlich belastet, was durch die Vielzahl von Wechselbeanspruchungen, die ein Fahrzeugreifen ausgesetzt ist, zu einem unterschiedlichen Ermüdungsverhalten führt. Das heißt, der für einen Wulstkern bestimmte Draht muß so ausgelegt sein, daß eine ausreichende Standfestigkeit - und damit Reifensicherheit - des am höchsten belasteten Bereichs gewährleistet ist. Die Reifengeometrie bringt es mit sich, daß der axial innere Bereich des Wulstkernes, etwa drei bis sechs mal so hoch belastet ist, wie der axial äußere Bereich.

Von dieser Problemstellung ausgehend liegt der Erfindung die Aufgabe zugrunde, einen Fahrzeugreifen mit einem ringförmigen Wulstkern so fortzubilden, daß die Beanspruchung der Wicklungen des Wulstkernes über die Querschnittsbreite vergleichmäßigt wird.

Die Lösung der Aufgabe erfolgt bei einem Fahrzeugreifen mit einem ringförmigen Wulstkern, der aus einem in mehreren Lagen gewickelten Draht besteht, dadurch, daß dem Wulstkern gegenüber einem Hexagonalkern in einem zumindest dreieckförmigen Bereich die Wicklungen fehlen, wobei der Bereich definiert ist durch die radial äußere Seite, mindestens die radial und axial äußere Seite des Hexagons und der Verbindungslinie der Eckpunkte der Seiten.

Vorzugsweise ist der Bereich im wesentlichen viereckig und der dem Felgenhorn am weitesten zugewandte Eckpunkt liegt auf der radial inneren und axial äußeren Seite des Hexagons.

Bei einem Fahrzeugreifen mit einem aus einem oder einer Mehrzahl von Drähten bestehenden Wulstkern erfolgt die Lösung der Aufgabe dadurch, daß dem Wulstkern gegenüber einem aus einem Draht in n Reihen und m Lagen oder aus n einzelnen in m Lagen übereinander gewickelten Drähten bestehenden Rechteckkern in einem im wesentlichen dreieckförmigen Bereich Wicklungen fehlen, wobei der radial äußere Eckpunkt des dreieckförmigen Bereichs durch den radial äußeren Eckpunkt des Rechteckkernes definiert ist und von diesem Eckpunkt ausgehend der axial innere Eckpunkt durch Weglassen von mehr als m-3 Windungen und der radial innere Eckpunkt durch Weglassen von mehr als n-3 Windungen definiert ist.

Durch diese Maßnahme, das heißt dem Entfernen von Wicklungen, die bei herkömmlichen Wulstkernen die geringsten Beanspruchungen tragen mußten, werden die verbleibenden Wicklungen höher belastet. Diese höhere Belastung wird jedoch nicht gleichmäßig auf die verbliebenden Wicklungen verteilt, sondern die jetzt axial äußeren werden höher belastet. Dadurch ist die Belastung insgesamt über den Wulstkernquerschnitt wesentlich gleichmäßiger verteilt.

Außerdem werden die Wicklungen über die Querschnittsbreite gleichmäßiger beansprucht. Hieraus resultiert eine gleichmäßige radiale Dehnung über die Breite des Wulstkernes.

Durch Weglassen von Wicklungen, wird außerdem eine die Fertigungskosten senkende Materialeinsparung erreicht, ohne daß dabei die Zuverlässigkeit des Fahrzeugreifens beeinträchtigt wird.

Vorzugsweise wird der dreieckförmige Bereich, in dem gegenüber einem herkömmlichen Wulstkern keine Wicklungen vorhanden sind, so gewählt, daß hierdurch 10 bis 25 % der Wicklungen eingespart werden. Das heißt, bei einem herkömmlichen Wulstkern befänden sich in diesem dreieckförmigen Bereich 10 bis 25 % der Gesamtwicklungen.

Der verwendete Draht kann sowohl einen runden als auch einen eckigen Querschnitt aufweisen und gummiummantelt oder nicht ummantelt sein.

Anhand einer Zeichnung soll die Erfindung nachfolgend näher erläutert werden. Es zeigt:
- Figur 1 -: einen erfindungsgemäßen Wulstkern, der aus einem ein zigen Draht gewickelt ist,
- Figur 2 -: einen herkömmlichen Hexagonalkern,
- Figur 3 -: einen erfindungsgemäßen aus mehreren Drähten gewickelten Wulstkern,
- Figur 3a -: einen herkömmlichen Rechteckkern,
- Figur 4 -: ein weiteres Ausführungsbeispiel,
- Figur 4a -: einen herkömmlichen Parallelogrammkern,
- Figur 5 -: die schematische Teildarstellung eines im Reifen angeordneten herkömmlichen Rechteckkernes.

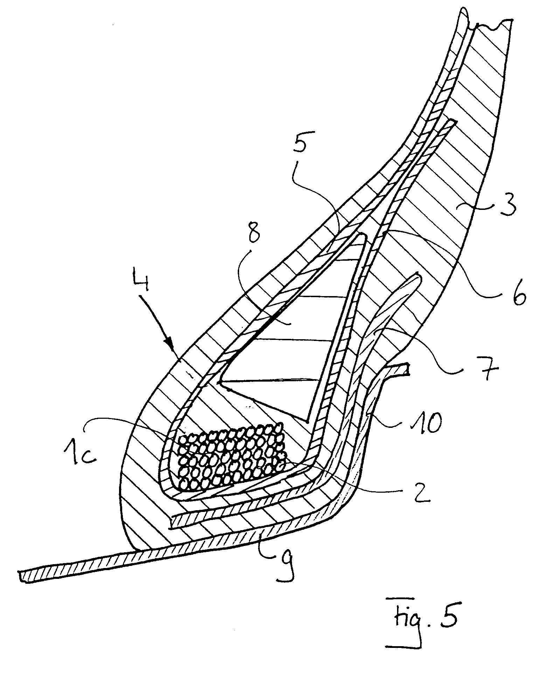

Figur 5 zeigt einen Ausschnitt einer Felge 9 mit den darauf aufsitzenden Reifen 3. In den Wulst 4 ist der Rechteckkern 1c einvulkanisiert, der aus einem kreisförmigen Draht 2 in mehreren Lagen gewickelt ist. Die Grundseite des rechteckigen Wulstkernes 1c verläuft parallel oder nahezu parallel zum Bett der Felge 9. In den Reifen 3 können im Bereich des Wulstes 4 mehrere Verstärkungslagen 5,6,7,8 einvulkanisiert sein.

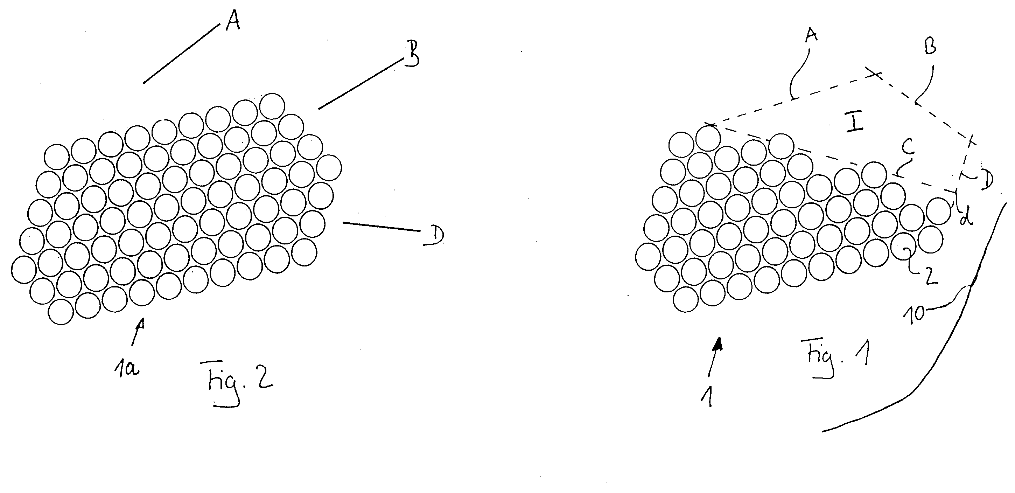

Figur 1 zeigt einen erfindungsgemäßen Wulstkern 1, der gegenüber einem in Figur 2 gezeigten herkömmlichen Hexagonalkern 1a einen Bereich I aufweist, in dem keine Drahtwicklungen vorhanden sind. Dieser Bereich I ist im wesentlichen zumindestens dreieckig, vorzugsweise, wie in der Figur gezeigt, viereckig.

Gegenüber dem herkömmlichen Hexagonalkern 1a ist der Bereich I, in dem keine Wicklungen vorgesehen sind, durch die radial äußere Seite A, die radial und axial äußere Seite B sowie die Verbindungslinie C der beiden Endpunkte der äußeren Seiten A und der radial und axial äußeren Seite B definiert. Bei dem vorzugsweise viereckigen Bereich I liegt der dem Felgenhorn C am weitesten zugewandte Eckpunkt d auf der radial inneren und axial äußeren Seite D. In dem so definierten Bereich I befänden sich bei einem herkömmlichen Hexagonalkern 10 - 25 % der Wicklungen.

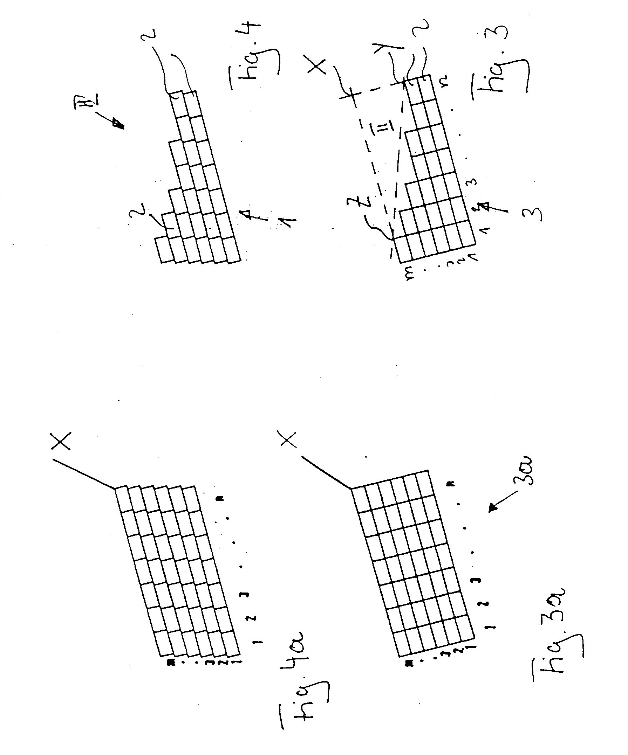

Figur 3 zeigt einen aus n verschiedenen, in jeweils m Lagen gewickelten, rechteckigen Drähten 2 gewickelten Wulstkern, der von einem herkömmlichen, in Figur 3a gezeigten Rechteckkern 3a dadurch abweicht, daß er einen gedachten Bereich II aufweist, in dem keine Wicklungen vorgesehen sind. Dieser Bereich II ist dreieckförmig mit den Eckpunkten X,Y,Z.

Der äußere Eckpunkt X des dreieckförmigen Bereichs II ist durch den radial äußeren Eckpunkt X des Rechteckkernes definiert. Der axial innere Eckpunkt Y wird erreicht, in dem ausgehend vom Eckpunkt X mehr als m-3 Windungen, also Lagen des Drahtes 2, weggelassen werden. Der radial innere Eckpunkt Z ist definiert indem ausgehend vom Eckpunkt X mehr als n-3 Windungen der Drähte 2 weggelassen werden.

Bei dem in der Figur 3 dargestellten schematischen Ausführungsbeispiel ist n = 7 und m = 5. Diese geringe Anzahl von Drähten 2 und Windungen stimmt mit der Realität nicht überein, so daß die zuvor beschriebene Gleichung zur Erreichung der Eckpunkte nicht mit dem gezeigten Beispiel übereinstimmt.

## Patentansprüche

1. Fahrzeugreifen mit einem ringförmigen Wulstkern (1), der aus einem in mehreren Lagen gewickelten Draht (2) besteht, **dadurch gekennzeichnet, daß** dem Wulstkern (1) gegenüber einem Hexagonalkern (1a) in einem zumindest dreieckförmigen Bereich (I) die Wicklungen fehlen, wobei der Bereich (I) definiert ist durch die radial äußere Seite (A), mindestens die radial und axial äußere Seite (B) des Hexagons und der Verbindungslinie (C) der Eckpunkte der Seiten (A,B).

2. Fahrzeugreifen nach Anspruch 1, **dadurch gekennzeichnet, daß** der Bereich (I) im wesentlichen viereckig ist und der dem Felgenhorn (10) am weitesten zugewandte Eckpunkt (d) auf der radial inneren und axial äußeren Seite (D) des Hexagons liegt.

3. Fahrzeugreifen mit einem ringförmigen Wulstkern (3), der aus einem oder einer Mehrzahl von in mehreren Lagen gewickelten Drähten (2) besteht, **dadurch gekennzeichnet, daß** dem Wulstkern (3) gegenüber einem aus einem Draht in n Reihen und m Lagen oder aus n einzelnen in m Lagen übereinandergewickelten Drähten (2) bestehenden Rechteckkern (3a) in einem im wesentlichen dreieckförmigen Bereich (II) Wicklungen fehlen, wobei der radial äußere Eckpunkt (X) des dreieckförmigen Bereichs (II) durch den radial äußeren Eckpunkt (X) des Rechteckkerns (3a) definiert ist, und ausgehend von diesem Eckpunkt (X) der axial innere Eckpunkt (Y) durch Weglassen von mehr als m-3 Windungen und der radial innere Eckpunkt (Z) durch Weglassen von mehr als n-3 Windungen definiert ist.

4. Fahrzeugreifen nach Anspruch 1 oder 3, **dadurch gekennzeichnet, daß** die fehlenden Windungen bezogen auf einen unveränderten Wulstkern 10 bis 25 % betragen.

5. Fahrzeugreifen nach Anspruch 1 oder 3, **dadurch gekennzeichnet, daß** der Draht (2) einen runden Querschnitt aufweist.

6. Fahrzeugreifen nach Anspruch 1 oder 3, **dadurch gekennzeichnet, daß** der Draht (2) einen eckigen Querschnitt aufweist.

7. Fahrzeugreifen nach Anspruch 5 oder 6, **dadurch gekennzeichnet, daß** der Draht (2) gummiummantelt ist.
